# EUROPÄISCHE PATENTSCHRIFT

(11) **EP 3 196 956 B1**
(45) Veröffentlichungstag und Bekanntmachung des Hinweises auf die Patenterteilung: **01.08.2018**
(21) Anmeldenummer: 17150714.8
(22) Anmeldetag: 09.01.2017
(51) Int. Cl.: H01M 2/02, H01M 2/04

(54) **VERFAHREN ZUR HERSTELLUNG EINES BATTERIEGEHÄUSES**
METHOD FOR PRODUCING A BATTERY HOUSING
PROCÉDÉ DE FABRICATION D'UN BOÎTIER DE BATTERIE

(30) Priorität: 21.01.2016 DE 102016101042; 01.04.2016 DE 102016106021
(43) Veröffentlichungstag der Anmeldung: 26.07.2017
(73) Patentinhaber: König Metall GmbH & Co. KG, 76571 Gaggenau (DE); Kerspe, Jobst H., 69256 Mauer (DE)
(72) Erfinder: Kerspe, Jobst H., 69256 Mauer (DE); Fischer, Michael, 76571 Gaggenau (DE)
(74) Vertreter: Geitz Truckenmüller Lucht Christ

(56) Entgegenhaltungen:
- DE-A1- 4 013 269
- DE-A1-102012 213 577
- DE-B4- 10 319 350
- JP-A- H05 275 115

## Beschreibung

Die Erfindung betrifft ein Verfahren zur Herstellung eines multifunktionalen Batteriegehäuses. Die Anforderungen an Batteriegehäuse sind inzwischen einigermaßen umfangreich. Im Falle von mobilen Anwendungen, also etwa im Automotivebereich, müssen die in dem Gehäuse aufgehobenen Batteriezellen bzw. -module mechanisch geschützt sein, zum einen gegen die Rüttelbeanspruchungen im gewöhnlichen Fahrbetrieb eines Fahrzeuges, wie aber auch im Falle einer Beschädigung des Fahrzeuges und damit gegebenenfalls auch des Batteriegehäuses im Falle eines Unfalles. In vielen Ländern wird darüber hinaus eine vollständige Kapselung der Zellen einer Batterie verlangt, um im Schadensfall ein Austreten der Batterieflüssigkeiten oder von Reaktionsprodukten bzw. die Bildung von Reaktionsprodukten zu verhindern. Letztlich dient die Kapselung der Batterie in dem Batteriegehäuse auch dem im Fahrzeugbereich relevanten Brandschutz.

Insbesondere im Bereich der Elektromobilität kommen weitere Anforderungen an derartige Batteriegehäuse hinzu, die dazu beitragen, die Lebensdauer, aber auch die Leistungsfähigkeit der eingesetzten Batterien zu verbessern. Schon heute muss sichergestellt sein, dass die in dem Batteriegehäuse aufgenommenen Batteriezellen nicht so weit auskühlen, dass die in der Batterie ablaufenden elektrochemischen Prozesse einfrieren. Darüber hinaus muss das Batteriegehäuse aber auch sicherstellen, dass möglicherweise auftretende überschüssige Wärme, etwa während der Durchführung eines Schnell-Ladeprozesses der Batterie oder im Falle einer verstärkten Leistungsentnahme, aus der Batterie zuverlässig abgeführt wird. Zusammengefasst bedeutet dies, dass innerhalb eines den heutigen Ansprüchen genügenden Batteriegehäuses die Temperatur in einem mittleren zulässigen Bereich gehalten werden muss, also eine definierte untere Temperaturschwelle, aber auch eine definierte obere Temperaturschwelle innerhalb des Batteriegehäuses nicht unter- bzw. überschritten werden darf. Es wird daher in Zukunft erforderlich sein, intelligente Batteriegehäuse mit einem intelligenten Thermo-Management vorzusehen.

In diesem Zusammenhang ist aus der JP 05 275115 A ein Batteriegehäuse sowie ein Verfahren zu dessen Herstellung bekannt, bei dem das Batteriegehäuse aus einem größeren äußeren Außentrog und einem kleineren Innentrog besteht, wobei die beiden Tröge jeweils mit einem oberseitigen Deckel derart verschlossen werden, dass diese Deckel jeweils mit einer Schweißnaht auf den Trögen fest aber lösbar befestigt sind. Dabei ist der Zwischenraum zwischen dem aus dem Druck und dem Innendruck von einem hitzeisolierenden Material angefüllt, ebenso wie der Zwischenraum zwischen dem oberseitigen Innendeckel des Innentrogs und dem Außendeckel des Außentrogs ebenfalls mit einem hitzeisolierenden Material verfüllt ist. Um an ein in diesem Batteriegehäuse aufgenommenes Batteriemodul heranzukommen, etwa um dieses zu warten oder auszutauschen, ist es also erforderlich, durch Auftrennen der beiden Schweißnähte sowohl den Außendeckel als auch den Innendeckel abzunehmen, wobei unklar ist, wie die innere Schweißnaht zur Befestigung des Innendeckels, die gemäß den vorstehenden Ausführungen in einem hitzeisolierenden Material eingebettet ist, geöffnet werden kann, ohne dieses Material zu beschädigen.

Aus der DE 10 2012 213 577 A1 ist ein Gehäuse für eine Batterie, sowie eine Batterie und eine Batterieanordnung bekannt, bei der die Batterie in einem an sich herkömmlichen Gehäuse aufgenommen ist, dass durch einen oberseitigen Deckel verschlossen ist, durch den die elektrischen Anschlusskontakte der Batterie hindurchgeführt sind. Besondere Merkmale betreffend ein Thermo - Management des Batteriegehäuses oder der Realisierung einer Vakuumdämmung mithilfe des Gehäuses können diesem Stand der Technik nicht entnommen werden.

Außerdem ist aus der DE 40 13 269 A1 ein Batteriegehäuse zur Aufnahme eines Batteriemodules eines Fahrzeuges bekannt, wobei das Batteriegehäuse als steifes Strukturelement ausgebildet ist und die Wandungselemente des Batteriegehäuses jeweils doppelwandig, d.h. in einer Sandwich-Bauweise mit einer Innen- und einer davon beabstandet angeordneten Außenwand ausgebildet sind. Der Zwischenraum zwischen den Innen- und Außenwänden ist bei dieser Ausführung jeweils mit einem porösen Isolationsmaterial ausgefüllt und anschließend evakuiert. Im Übrigen sind zwischen den einzelnen Batteriemodulen Latentwärmespeicher zur Kühlung der Batteriemodule vorgesehen, um erforderlichenfalls die Batterie kühlen zu können.

Aus der EP 0 588 004 A1 ist ein weiteres Batteriegehäuse zur Aufnahme eines Batteriemoduls eines Fahrzeuges bekannt. Das Batteriegehäuse ist als steifes Strukturelement ausgebildet. Die Wandungselemente des Batteriegehäuses sind jeweils doppelwandig, d. h. ebenfalls in einer Sandwich-Bauweise mit einer Innen- und einer davon beabstandet angeordneten Außenwand ausgebildet. Der Zwischenraum dieser Innen- und Außenwände ist mit einem porösen Stützmaterial ausgebildet. Die zur Kühlung eingesetzten Kühlelemente sind ebenfalls in diesem Zwischenraum angeordnet. Es handelt sich hierbei allerdings um ein irreversibel mit der in dem Gehäuse angeordneten Batteriezelle verbundenes Gehäuse, das im Schichtaufbau, umfassend von außen nach innen eine Isolier-, eine Wärmespeicher- und eine Kühlungsschicht, hergestellt ist.

Aus der EP 2 985 804 A1 ist ebenfalls ein Batteriegehäuse zur Aufnahme eines oder mehrerer Zellblöcke einer Batterie mit einer Doppelwandung vorbekannt, deren Zwischenraum zwischen einer Innen- und Außenwand mit einer gestützten Vakuumisolierung aus porösem Stützmaterial ausgefüllt ist.

Außerdem ist aus der DE 103 19 350 B4 ein Batteriekastenmodul für ein Fahrzeug, insbesondere für ein Kraftfahrzeug, vorbekannt. Es handelt sich dabei um einen mechanisch robusten Kasten zur Aufnahme einer Fahrzeugbatterie und einen den Kasten schließenden und vom Kasten lösbaren Deckel, wobei der Kasten eine wannenartige Doppelwandkonstruktion mit einer schaltbaren Vakuumdämmung aufweist, die zwischen einem thermischen Durchgangszustand und einem thermischen Isolationszustand hin- und herschaltbar ist. Das Modul ist zusätzlich mit einer elektrischen Steuerung versehen, die für das Schalten der Vakuumdämmung zuständig ist. Die wannenartige Konstruktion des Batteriekastenmoduls soll darüber hinaus dazu beitragen, dass zumindest geringe Mengen auslaufender Batteriesäure aufgefangen werden können.

Unter einer schaltbaren Vakuumdämmung ist in diesem Zusammenhang zu verstehen, dass wenn sich die Vakuumdämmung in einem ungeschalteten bzw. stromlosen Zustand befindet, der Isolationszustand des Batteriegehäuses aufrechterhalten wird, also in diesem Zustand eine Wärmeisolation der Batterie gegeben ist. Zusätzlich kann aber die Vakuumdämmung in Abhängigkeit von der Batterietemperatur und/oder der Umgebungstemperatur und/oder der Stromstärke oder sonstigen externen Anforderungen geschaltet werden und hierdurch in einen thermischen Durchgangszustand versetzt werden. Hierzu ist in der Doppelwandung des Batteriegehäuses ein Wärmedämmmaterial, z.B. ein fein- bzw. mikroporöser Füllstoff, eingebracht und im Weiteren deren Innenraum evakuiert, um hierdurch eine niedrige Wärmeleitfähigkeit herzustellen. Zusätzlich ist ein Metallhydridgetter in das Innere dieser Dämmung integriert. Dieser Getter ist in der Lage, Wasserstoff bei Temperaturen unter ca. 100°C zu speichern. Beim Aufheizen des Getters kann somit in dieser Wärmedämmschicht ein definierter Wasserstoffpartialdruck erzeugt werden. Dies führt i.V.m. der evakuierten Isolierschicht zu einem signifikanten Anstieg der Wärmeleitfähigkeit des Isolierformteils. Dieser Zustand wird dann als Durchgangszustand der Wärmedämmung bezeichnet, d.h. der Isolationszustand des Batteriegehäuses ist weitgehend aufgehoben, und die überflüssige Wärme kann durch das Batteriegehäuse nach außen abgeführt werden.

Es versteht sich, dass die Herstellung derartiger Batteriegehäuse eine hochkomplexe Aufgabe insbesondere für den Hersteller des Batteriegehäuses darstellt, wobei dieser üblicherweise nicht über das Know-how zur Herstellung der in dem Gehäuse aufzunehmenden Fahrzeugbatterie oder sonstigen Batterie verfügt. Umgekehrt verfügt aber der Hersteller einer Fahrzeugbatterie üblicherweise nicht über die erforderlichen Maschinen und das erforderliche Know-how, um das Batteriegehäuse mit den vorstehend beschriebenen gesteigerten Anforderungen herstellen zu können. Nachdem nach abgeschlossener Herstellung die Batterie in dem Batteriegehäuse aufgenommen sein soll, würde es naheliegen, dass der Batteriehersteller die Batterie zum Zwecke der Herstellung des Batteriegehäuses und damit zur Herstellung des Endproduktes an den Hersteller des Batteriegehäuses übermittelt, der dann die Batterie in das von ihm zu fertigende Batteriegehäuse integriert und anschließend das Gehäuse reversibel oder irreversibel verschließt. In diesem Zusammenhang hat sich aber gezeigt, dass der Transport einer Batterie in dem hier in Rede stehenden Leistungsbereich wiederum selbst hochgefährlich ist, da eine solche Batterie spannungsführende Teile besitzt, die mit Spannungen in der Größenordnung von mehreren hundert Volt oder gar Kilovolt versehen sind. Zum einen ist somit der Transport derartiger Batterien hochgefährlich, aber auch deren weitere Behandlung und Verarbeitung bei dem Hersteller des Batteriegehäuses.

Ausgehend von dieser Problematik liegt der Erfindung die Aufgabe zu Grunde, ein Verfahren zur Herstellung eines multifunktionalen Batteriegehäuses anzugeben, bei dem zunächst ein Zwischenprodukt bzw. ein Bausatz erzeugt wird, das bzw. der im Ergebnis aus ungefährlichen Einzelteilen besteht, die dann ohne weiteres versandt und beispielsweise an einen Batteriehersteller übermittelt werden können, der dann diese ungefährlichen Einzelteile mit vergleichsweise einfachen technischen Mitteln zu dem fertigen multifunktionalen Batteriegehäuse mit Eigenschaften gemäß der EP 2 985 804 A1, dann mit bereits integrierter Batterie, zusammensetzen kann.

Diese der Erfindung zu Grunde liegende Aufgabe wird durch ein Verfahren gemäß Anspruch 1 gelöst. Vorteilhafte Ausgestaltungen der Erfindung können den abhängigen Ansprüchen 2 bis 17 entnommen werden.

Gemäß dem geltenden Anspruch 1 umfasst das Batteriegehäuse mit dem beschriebenen integrierten Thermo-Management zunächst eine obere und eine unter Halbschale, die dann zu einem späteren Zeitpunkt zu einem Batteriegehäuse miteinander verbunden werden. Zunächst werden jedoch als Teil-Zwischenprodukte eine untere Halbschale, umfassend eine Innenwandung und eine Außenwandung, mit zwischenliegenden Isolierformteilen so vorgefertigt, dass nach dem vollständigen Zusammenbau des Batteriegehäuses und der Evakuierung des Isolierspaltes ein Batteriegehäuse mit.den Eigenschaften des vorstehend beschriebenen Thermomanagements und der Schutzfunktion, etwa Crashsicherheit der in dem Batteriegehäuse aufgenommenen Batterie, entsteht. Als weiteres Teil-Zwischenprodukt werden eine vorgefertigte Innenwandung und eine vorgeformte Außenwandung hergestellt, wobei dann diese beiden Teil-Zwischenprodukte etwa bei einem Batteriehersteller derart zusammengefügt werden, dass zunächst die Batterie in die vorgefertigte untere Halbschale eingesetzt wird, dann die Innenwandung der oberen Halbschale mit der Innenwandung der unteren Halbschale verbunden wird und anschließend unter Zwischenlage des oder der vorgeformten Isolierformteile die Außenwandung der oberen Halbschale aufgesetzt wird und mit der Außenwandung der unteren Halbschale reversibel verbunden wird. Dabei erfolgt die Verbindung der inneren Wandung der oberen Halbschale mit der inneren Wandung der unteren Halbschale sowie der Außenwandung der oberen Halbschale mit der Außenwandung der inneren Halbschale vorzugsweise mittels einer einfachen Schweißnaht, insbesondere einer Laserschweißnaht, so dass diese Arbeiten auch bei einem Batteriehersteller ohne weiteres durchführbar sind.

Dabei sind die Innen- und Außenwandungen der doppelwandigen unteren Halbschale und/oder der oberen Halbschale jeweils im Wege des Hydroformings hergestellt, das heißt durch einen Umformvorgang im Autoklaven in einem geschlossenen Formwerkzeug mittels eines Innendrucks, der in das entsprechende Formwerkzeug eingebracht wird. Der Umformdruck wird dabei in an sich bekannter Weise etwa mittels einer Wasser-Öl-Emulsion in das Formwerkzeug eingebracht. Mit diesem Verfahren können sowohl die Innenwandungen als auch die Außenwandungen der oberen oder unteren Halbschale in hoher Stück- und Taktzahl hergestellt werden. Außerdem kann das Verfahren zur Herstellung der beiden Halbschalen gegebenenfalls mit integriertem Isolierformteil bzw. integrierten Isolierformteilen in einem einzigen Umformprozess, also bei gleichzeitiger Umformung der Innen- und Außenwandung hergestellt werden. Es handelt sich dabei also im eigentlichen Sinne um eine Doppelumformung. Im Ergebnis bestehen die Halbschalen also aus einem Doppelblech mit dazwischenliegendem Isolierformteil bzw. Isolierformteilen, wobei im Falle der Doppelformung in einer Vorstufe die Doppelblechanordnung mit dem bzw. den zwischen der Innen- und der Außenwandung angeordneten Isolierformteil bzw. Isolierformteilen bereits partiell verschweißt ist, um sicherzustellen, dass das bzw. die Isolierformteil/e beim Prozess der Umformung an ihrem vorgesehenen Platz verbleiben.

Dabei werden die einzelnen Halbschalen derart hergestellt, dass sie jeweils aus einer Innen- und Außenwandung bestehen, zwischen denen Isolierformteile angeordnet sind. Nach dem Einsetzen der Batterie werden Innenwandungen der unteren und oberen Halbschale und anschließend die Außenwandungen der unteren und oberen Halbschale miteinander verschweißt. Dabei können durchaus unterschiedliche Schweißverfahren zum Einsatz gelangen, etwa WIG-Schweißen oder Laserschweißen. Denkbar ist es auch, die Verbindung mittels einer vakuumdichten Klebung, etwa mit Epoxitharz-Klebern, zu realisieren.

In weiterer Ausgestaltung kann die auf diesem Wege hergestellte doppelwandige untere oder auch obere Halbschale zusätzlich mit einer die Außenwandung außenseitig umgreifenden Blechmanschette verstärkt sein. Hierdurch wird bedarfsweise eine höhere Versteifung des Batteriegehäuses und somit eine höhere Crashsicherheit erreicht.

Eine weitere abschnittsweise Versteifung der Außenwandungen der Halbschalen kann vorzugsweise im Bereich von später an dem Batteriegehäuse zu befestigenden oder bereits vorgesehenen Befestigungselementen, die zu einer späteren Befestigung des Batteriegehäuses an der Fahrzeugkarosserie eines Fahrzeuges vorgesehen sind, mit so genannten "Tailored Blanks", also zusätzlichen Versteifungsplatinen, realisiert sein.

Das erfindungsgemäße Batteriegehäuse besitzt als Doppelblechkonstruktion mit zwischenliegendem Stützmaterial bereits eine hohe Robustheit gegen etwa eindringende Gegenstände. Dadurch, dass die Außenwandung der unteren Halbschale zusätzlich mit einer schussfesten Platte oder einem schussfesten Formteil versehen ist, kann dieser Schutz noch einmal nachhaltig verbessert werden. Neben dem verbesserten Schutz der in dem Batteriegehäuse aufgenommenen Batterie, wird hierdurch auch einer Beschädigung der Isolierhülle durch etwa eindringende Fremdkörper vorgebeugt, wodurch auf Grund eines möglichen Vakuumverlustes bei einer großflächigen Beschädigung der äußeren Halbschale die Isolationswirkung erheblich beeinträchtigt würde.

In vorteilhafter Weiterbildung dieser Ausgestaltung ist die Platte oder das Formteil zwar einerseits aus einem leichten Werkstoff hergestellt, der aber zugleich zäh und hochfest ausgebildet ist. Hier kommen insbesondere Hybridwerkstoffe, die etwa im Schichtaufbau mit den Lagen Leichtmetall / Kunststoff / Leichtmetall hergestellt sind, oder Leichtmetall Strukturwerkstoffe, wie etwa Aluminiumschäume, in Betracht.

In abermals vorteilhafter Weiterbildung wird die schussfeste Platte oder das schussfeste Formteil auswechselbar befestigt, etwa mittels Spannbändern, Klebung oder Blechlaschen-Klipp-Elementen.

Nach dem Einsetzen der Batterie in die untere Halbschale kann dann die untere Halbschale mittels Laserschweißnähten mit der oberen Halbschale verbunden werden. Diese Schweißnähte können im Bedarfsfall etwa im Zusammenhang mit allfälligen Wartungsarbeiten vergleichsweise einfach aufgetrennt und nach Abschluss der Wartungsarbeiten wieder verschlossen werden.

In bevorzugter Ausgestaltung erfolgt dies dadurch, dass an die Oberkante der Außenwandung der unteren Halbschale und die Unterkante der Außenwandung der oberen Halbschale jeweils umlaufende Blechfahnen angeformt sind, die dann unter Ausbildung einer Rollnaht ineinander eingedreht und miteinander verschweißt werden.

Wie bereits vorstehend ausgeführt, kann eine zusätzliche Wärmeisolation der Batterie dadurch erreicht werden, dass die in dem Bereich zwischen der Innenwandung und der Außenwandung der Halbschalen angeordneten Isolierformteilen evakuiert werden und somit eine Vakuumdämmung hergestellt wird. Mittels integrierter Metallhydridgetter kann dann die Wärmeleitfähigkeit der Vakuumisolierung signifikant gesteigert werden und somit von einem Zustand der Wärmedämmung in einen Durchgangszustand geschaltet werden. Zur Evakuierung der vollständig montierten und vakuumdicht verschweißten Gehäusekomponenten oder Halbschalen , sind die Halbschalen bzw. die Halbschalenabschnitte jeweils mit einem oder mehreren Vakuumports zur Evakuierung der innenliegenden Faserboards versehen.

In konkreter Ausgestaltung umfasst ein solcher Vakuumport gemäß Anspruch 12 zunächst eine Öffnung in der Außenwandung der Halbschale, wobei diese Öffnung von einem treppenartigen, metallischen Saugflansch umgriffen ist, der einen Absatz ausbildet, der mit einer metallischen Dichtungsmasse, vorzugsweise Silberlot, bestückt ist. Außerdem ist diese Öffnung durch ein mit dem Saugflansch verbundenes Drahtgitter übergriffen, wobei die Öffnung auf ihrer dem Isolations- und Stützmaterial, also insbesondere den Isolierformteilen abgewandten Oberkante mit einem konvex nach außen gewölbten Deckelelement versehen ist. Das Drahtgitter dient dazu, während der Evakuierung der durch die Isolierformteile gebildeten Isolation ein Ansaugen von Fasern und/oder Fasermaterialien durch die Vakuumpumpe zu verhindern oder zumindest zu minimieren. Das Deckelelement ist in seiner konvexen Krümmung nicht in der Lage, die Öffnung vollständig abzudecken und mittels einer entsprechenden Vorrichtung in seiner bestimmungsgemäßen Lage, also unter Offenlassen der Öffnung gehalten.

Im Weiteren kann dann über die Öffnung eine die Öffnung überdeckende Saugglocke mit angeschlossener Vakuumpumpe zur Erzeugung eines Unterdrucks angeschlossen werden, so dass der mit Isolations- und/oder Stützmaterial gefüllte Isolationsspalt, bestimmungsgemäß evakuiert wird. In einem weiteren Schritt wird dann anschließend der gewölbte Deckel mittels eines in die Saugglocke integrierten Stempels gespreizt und hierdurch und gemäß dem bekannten "Knackfrosch-Prinzip" so weit in die metallische Dichtungsmasse gedrückt, bis das Deckelelement in seiner planen Ausdehnung die Öffnung nunmehr verschließt und in dieser Stellung verhaftet. Der Deckel wird durch die Eigenspannung in seiner die Öffnung verschließenden Position gehalten, mithin ist die Öffnung vakuumdicht verschlossen.

In alternativer Ausgestaltung hierzu umfasst der Vakuumport wiederum die erwähnte Öffnung, wobei eine Umrandung dieser Öffnung wiederum mit einer metallischen Dichtungsmasse, vorzugsweise Silberlot, auf ihrer dem Isolations- und/oder Stützmaterial abgewandten Oberfläche versehen ist. Oberhalb dieser Öffnung ist ein Deckelelement mittels einer Haltestange gehalten, wobei die gesamte Vorrichtung von einer Saugglocke mit angeschlossener Vakuumpumpe übergriffen ist, so dass über die Vakuumpumpe durch die Öffnung das integrierte Isolations- und Stützmaterial, insbesondere das erwähnte Faserboard, evakuierbar ist. Nach Abschluss des Evakuierungsvorgangs kann dann wiederum mittels einer induktiven Heizung die Dichtmasse induktiv erwärmt und verflüssigt werden, wobei dann die Halterung des Deckelelementes gelöst und das Deckelelement gegebenenfalls erneut durch einen entsprechenden Stempel abgesenkt und in die flüssige Dichtungsmasse gedrückt wird, so dass dann nach Abkühlung und Aushärtung der metallischen Dichtungsmasse die Öffnung des Vakuumports vakuumdicht verschlossen ist. Danach kann die Saugglocke mit der angeschlossenen Vakuumpumpe entfernt werden.

In abermals alternativer Ausgestaltung weist der Vakuumport wiederum die erwähnte Öffnung zu dem in dem Bereich zwischen Innen- und Außenwandung einer Halbschale integrierten Isolations- und/oder Stützmaterial, wobei die Öffnung eine trichterartige Ausgestaltung hat, die nach erfolgter Evakuierung mit einem korrespondierend zu der trichterartig gestalteten Öffnung ausgeformten Stopfen verschließbar und dann mittels einer Laserschweißnaht oder einer sonstigen Schweißnaht in dieser Verschlusslage fixierbar ist.

Die Erfindung wird nachstehend anhand eines oder mehrerer in der Zeichnung dargestellter Ausführungsbeispiele näher erläutert.

Es zeigen:
- Figur 1:: ein Batteriegehäuse mit einer darin aufgenommenen Batterie in einer Ansicht,
- Figur 2:: a) einen Ausschnitt des doppelwandigen Batteriegehäuses vor der Umformung in einer Querschnittansicht, b) den in Fig. 2a) gezeigten Ausschnitt in einer Draufsicht,
- Figur 3 :: einen Ausschnitt des doppelwandigen Batteriegehäuses nach der Umformung in einer Querschnittansicht,
- Figur 4:: einen Verschluss des Vakuumports mit einem gewölbten Deckel und
- Figur 5:: einen Verschluss des Vakuumports mit planem Deckel,
- Fig. 6:: ein Batteriegehäuse in einer Explosionsdarstellung in einer Querschnittansicht und
- Fig. 7:: eine alternative Ausgestaltung des Batteriegehäuses in einer Explosionsdarstellung in einer Querschnittansicht.

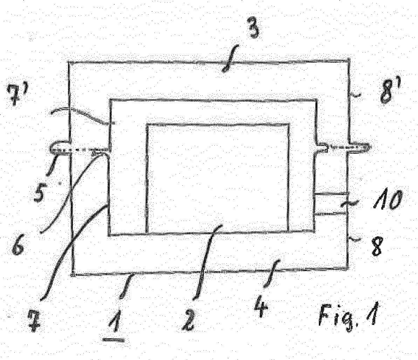

Figur 1 zeigt ein Batteriegehäuse 1 mit einer in dem Batteriegehäuse aufgenommenen Batterie 2. Das Batteriegehäuse 1 umfasst zwei Halbschalen, nämlich eine obere Halbschale 3 und eine untere Halbschale 4, die jeweils durch Laserschweißnähte, eine innere Schweißnaht 5 und eine äußere Schweißnaht 6, miteinander reversibel verbunden sind. Jede der beiden Halbschalen besitzt eine Innenwandung 7, 7' sowie eine Außenwandung 8, 8'. Jeweils zwischen der Innenwandung 7 und der Außenwandung 8 der unteren Halbschale 4, sowie zwischen der Innenwandung 7' und der Außenwandung 8' der oberen Halbschale 3 ist eine gestützte Vakuumisolierung in Form so genannter Isolierformteile 11 eingebracht, die in so genannter Sandwich-Bauweise fest mit der der jeweiligen Innen- bzw. Außenwandung 7, 7' bzw. 8,8'verbunden ist. Dabei wird die hier so genannte "gestützte Vakuumisolierung aus den Innen- und Außenschalen und dem Stütz-, bzw. Isolier-, bzw. Füllmaterial, welches sich in dem Isolierspalt zwischen den Innen- und Außenschalen befindet, gebildet. Dieser Isolierspalt wird dann evakuiert, woraufhin sich dann aufgrund der äußere Druckbelastung eine Sandwich-Struktur ausbildet. Aus dieser Evakuierung resultiert sowohl die für das Thermo-Management erforderliche niedrige Wärmeleitfähigkeit als auch die für die Crashsicherheit erforderliche hohe Festigkeit und Steifigkeit.

Die entsprechende Ausgestaltung des Batteriegehäuses 1 ermöglicht es, an einen Batteriehersteller ein Zwischenprodukt zu liefern, bestehend aus der bereits fertiggestellten unteren Halbschale 4, umfassend eine Innenwandung 7 und eine Außenwandung 8, wobei zwischen diesen beiden Wandungen bereits der mit Isolierformteilen 11 gefüllte Isolierspalt ausgebildet ist, der nach dem vollständigen Zusammenbau und dem Verschließen des Batteriegehäuses 1 evakuiert wird und dann die sich nach der Evakuierung ausbildende gestützte Vakuumisolierung ausbildet. Darüber hinaus kann diese untere Halbschale 4 mit einer vakuumdichten Durchführung 10 für den elektrischen Anschluss der Batterie 2 versehen sein. In diese untere Halbschale 4 wird dann beim Batteriehersteller oder an anderer Stelle die jeweils erforderliche bzw. gewünschte Batterie 2 eingesetzt und gegebenenfalls bereits über die Durchführung 10 elektrisch angeschlossen.

Auf die untere Halbschale 4 wird dann zunächst die Innenwandung 7' der oberen Halbschale 3 aufgesetzt und mit der Innenwandung 7 der unteren Halbschale 4 mittels einer inneren Laserschweißnaht 6 verschlossen. Dann wird die Innenwandung 7' bestimmungsgemäß mit vorgeformten Isolierformteilen 11 umhüllt, d.h. mit einem geeigneten Isolations- und/oder Stützmaterial 24 umgeben und anschließend die Außenwandung 8' der oberen Halbschale 3 aufgesetzt. In einem weiteren Schritt kann dann die Außenwandung 8' der oberen Halbschale 3 mit der Außenwandung 8 der unteren Halbschale 4 mittels einer weiteren äußeren Laserschweißnaht 5 verbunden werden. Dabei können die Schweißnähte bedarfsweise, etwa im Wartungs- oder Reparaturfall, aufgetrennt und wieder verschlossen werden.

Die im vorstehend genannten Absatz geschilderten Verfahrensmerkmale sind,, vergleichsweise einfach, da sie sich im Wesentlichen in der Anbringung der Schweißnähte 5, 6 zur Verbindung der inneren und äußeren Wandungselemente der oberen und unteren Halbschalen 3 und 4 erschöpfen. Sie können daher beispielsweise von einem Batteriehersteller vorgenommen werden, so dass im Unterschied zum Stand der Technik nicht mehr die Batterie 2 zu dem Umform-Unternehmen geschickt werden muss, sondern vielmehr die von dem Umform-Unternehmen aufwändig gefertigten Zwischenprodukte an den Batteriehersteller zur Endfertigung des Batteriegehäuses 1 übermittelt werden können. Der Batteriehersteller bekommt demnach einen Bausatz geliefert, aus dem er durch einfache Montage, Verschließen und Evakuierung ein Batteriegehäuse 1 herstellen kann.

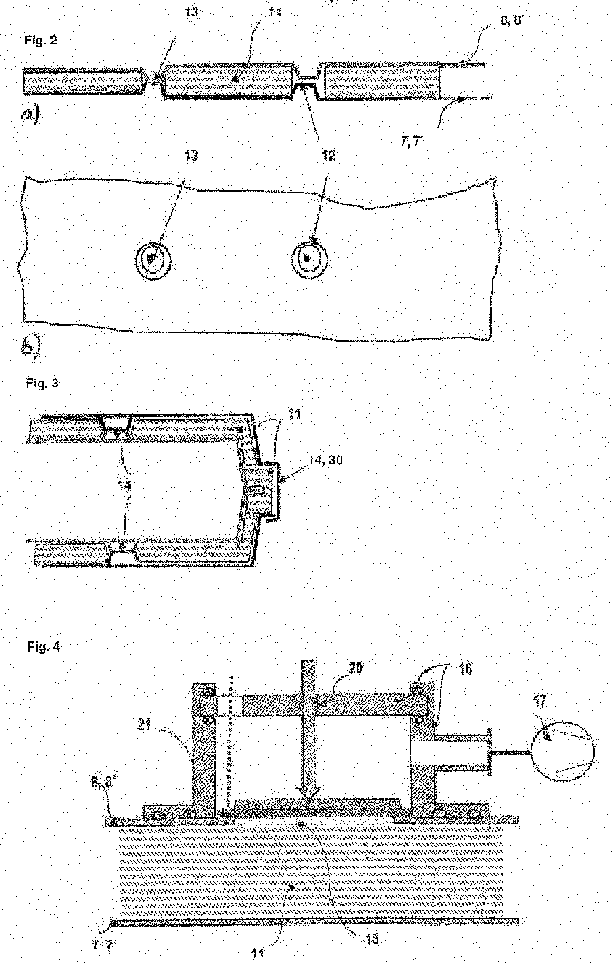

In alternativer Ausgestaltung können die doppelwandigen Wandungselemente der oberen und/oder unteren Halbschale 3 und 4 jeweils gemäß Figur 2 abschnittsweise vorgeformt werden, so dass die zwischen der Innen- und der Außenwandung vorgesehenen Isolierformteile 11 jeweils bereits vor dem Umformvorgang an ihrer korrekten Positionierung angeordnet sind.

Figur 2 a) zeigt in einem Querschnitt eine dementsprechende DoppelblechAnordnung zur späteren Ausbildung einer oberen oder unteren Halbschale 3 oder 4 mit einer Innenwandung und einer Außenwandung 7 und 8, zwischen denen jeweils ein Isolierformteil 11 angeordnet ist. Um die Isolierformteile 11 an ihrer bestimmungsgemäßen Position zu halten, sind die Wandungen mit entsprechenden Einschnürungen 12 versehen, die ein Verrutschen der Isolierformteile 11 in dem Zwischenraum zwischen der Innenwandung und Außenwandung 7 und 8 bzw. 7' und 8' ausschließen. Um die entsprechenden Einschnürungen 12 stabil zu halten, sind diese Einschnürungen 12 zusätzlich mittels entsprechender Schweißpunkte 13 gesichert.

Figur 2b) zeigt die Doppelblechanordnung in einer Draufsicht, wobei insbesondere die Lage der Schweißpunkte 13 im Bereich der Einschnürungen 12 aus dieser Ansicht hervorgeht.

Figur 3 zeigt dann die Doppelwand-Konstruktion einer Halbschale nach abgeschlossenem Umformprozess, wobei der Umformprozess zur Herstellung der eigentlichen Halbschale, sei es nun die obere Halbschale 3 oder die untere Halbschale 4, vorzugsweise im Wege des bereits erwähnten Hydroformings erfolgt, also im vorliegenden Falle eine Doppelumformung der jeweiligen Innenwandung 7, 7' und der jeweiligen Außenwandung 8, 8' unter Zwischenlage der bereits integrierten Isolierformteile 11, wobei dann in einem weiteren Schritt die Außenwandungen 8 bzw. 8' gemäß der Darstellung in Figur 3 gegebenenfalls mit einer zusätzlichen, die jeweilige Außenwandung 8 oder 8' umgreifenden Blechmanschette 14 versteift sein können.

Figur 4 zeigt in einer Querschnittansicht ein Verfahren und eine Vorrichtung zur Evakuierung der zwischen den Innenwandungen 7, 7' und den Außenwandungen 8, 8' vorgesehenen gestützten Vakuumisolierung, hier insbesondere realisiert in Form eines zwischen den Innenwandungen 7, 7' und den Außenwandungen 8, 8' angeordneten Isolierformteils 11 oder mehrerer Isolierformteile in diesem Bereich. Hierzu ist die Außenwandung 8, 8' mit einer oder mehreren Öffnungen 15 versehen, auf der/denen eine Saugglocke 16 mit einer Vakuumpumpe 17 angeschlossen werden kann, um den Bereich der gestützten Vakuumisolierung zu evakuieren. Hierdurch wird bestimmungsgemäß die Wärmeleitfähigkeit des zur gestützten Vakuumisolierung eingesetzten Materials gesenkt bzw. dessen Isolierungswirkung gesteigert. In konkreter Ausgestaltung ist die nicht weiter dargestellte Saugglocke 16 mit einer Schiebedurchführung 20 für ein planes Deckelelement 21 versehen, das nach erfolgter Evakuierung des Bereichs der gestützten Vakuumisolierung abgesenkt werden und mit einer Laserschweißnaht die Öffnung 15 vakuumdicht verschließen kann bzw. in eine metallische Dichtungsmasse, vorzugsweise ein Silberlot, abgesenkt werden kann, das induktiv erwärmt und anschließend abgekühlt werden kann, so dass hierdurch mittels des planen Deckelelementes 21 ein reversibler Verschluss des Vakuumports nach abgeschlossener Evakuierung der innenliegenden Vakuumisolierung hergestellt ist.

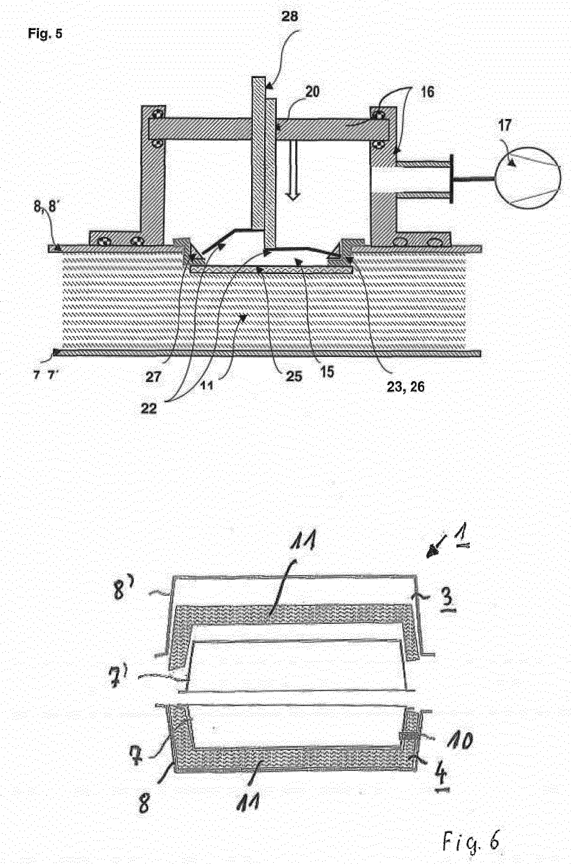

In alternativer Ausgestaltung gemäß Figur 5 kann die besagte Öffnung 15 auch mit einem konvex gewölbten Deckelelement 22 versehen sein, das in seiner gewölbten Ursprungsposition die Öffnung 15 nicht verschließt. Dabei ist das Deckelelement 22 auf einen die Öffnung einfassenden Saugflansch 23 aufgesetzt, der auf seiner dem Isolationsmaterial 24 zugewandten Seite mit einem metallischen Drahtgitter 25 verschweißt ist. Aufgrund seiner treppenartigen Gestaltung bildet der Saugflansch 23 einen Absatz 26 aus, wobei auf der der Öffnung abgewandten Oberseite dieses Absatzes 26 eine die Öffnung 15 umgreifende, metallische Dichtungsmasse, vorzugsweise Silberlot, aufgebracht ist. Die gesamte Anordnung sowie insbesondere die Öffnung 15 ist wiederum von einer Saugglocke 16 mit angeschlossener Vakuumpumpe 17 übergriffen, mittels derer das Isolationsmaterial 24 durch die Öffnung 15 bestimmungsgemäß evakuierbar ist. Dabei hält das Drahtgitter während der Evakuierung angesaugtes Isolationsmaterial zurück, das ansonsten die Vakuumpumpe verstopfen könnte. Darüber hinaus ist in die Saugglocke 16 ein absenkbarer Stempel 28 integriert. Mit diesem Stempel 28 wird das zunächst gewölbte Deckelelement 22 derart heruntergedrückt, dass es plan gedrückt wird, mithin die Öffnung 15 verschließt und der Außenumfang des gewölbten Deckelelementes 22 in die Dichtungsmasse 27 eingedrückt wird, so dass ,dann das ursprünglich gewölbte Deckelelement 22 aufgrund seines nunmehr vergrößerten Umfangs die Öffnung 15 vollständig vakuumdicht verschließt. Nachdem auf diese Weise erfolgten Verschluss der Öffnung 15 mittels des ursprünglich gewölbten Deckelelementes 22 ist das der mit Stütz- und Isolationsmaterial 24 gefüllte Isolationsspalt evakuiert und vakuumdicht abgeschlossen.

Fig. 6 zeigt eine alternative Ausgestaltung des erfindungsgemäßen Verfahrens. Dabei besteht zunächst die vorgefertigte untere Halbschale 4 gemäß dem vorstehend beschriebenen Verfahren aus einer Außenwandung 8, also einem Außenblech, sowie einer davon beanstandet angeordneten Innenwandung 7, also einen Bereich, zwischen denen ein oder mehrere Isolierformteile 11 angeordnet sind. Diese Bestandteile der unteren Halbschale sind bereits vormontiert und zum Zwecke eines leichteren Handlings miteinander verklebt. Außerdem weist die untere Halbschale eine Durchführung 10 auf, durch die in den Innenraum der unteren Halbschale 4 von außen etwa für elektrische Anschlüsse für die in dem zu fertigenden Batteriegehäuse 1 aufgenommene Batterie 2 geführt werden können.

Die obere Halbschale 3 dieser alternativen Ausgestaltung weist insoweit in Übereinstimmung mit der bisherigen Ausführung ebenfalls eine Außenwandung 8' sowie eine Innenwandung 7' auf, zwischen denen ein oder mehrere Isolierformteil/e 11 angeordnet ist/sind.

Dementsprechend ist sowohl die untere 4 als auch die obere Halbschale 3, bzw. deren Bestandteile bei dieser Ausführung einbaufertig vorgefertigt.

Diese komplett vorgefertigte untere Halbschale 4 wird dann in Verbindung mit den Einzelteilen der oberen Halbschale 3 geliefert. Diese sind erneut die bereits vorgeformte Innenwandung 7' sowie die vorgeformte Außenwandung 8', wobei es sich jeweils um im Wege des Hydroforming hergestellte Bleche handelt. Zur Zwischenlage zwischen der Innenwandung 7' und der Außenwandung 8' der oberen Halbschale 3 werden zusätzlich ebenfalls bereits vorgeformte Isolierformteile 11 bzw. ein einzelnes vorgeformtes Isolierformteil geliefert.

Die Verbindung der unteren mit der oberen Halbschale erfolgt dann analog der vorherigen Ausführung, d.h. die Innen- und Außenwandungen werden gemäß einer der vorstehend beschriebenen Methoden miteinander verschweißt, um ein geschlossenes Batteriegehäuse 1 auszubilden. Dies erst nachdem die Batterie 2 in die untere Halbschale 4 bestimmungsgemäß eingesetzt und gegebenenfalls über die Durchführung 10 angeschlossen wurde.

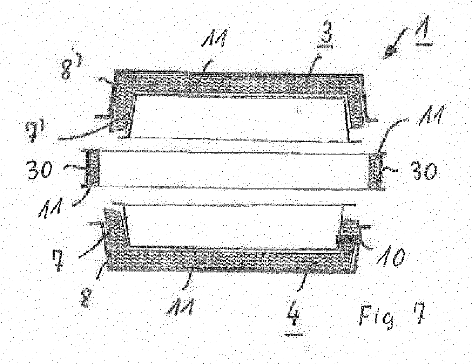

In einer abermals alternativen Ausgestaltung gemäß Figur 7 kann zusätzlich zu der bereits als fertig montiertes Zwischenprodukt hergestellten unteren Halbschale, die wie in Verbindung mit Figuren 2 und 3 beschrieben hergestellt wurde, auch die obere Halbschale 3 als vollständig vorgefertigtes Zwischenprodukt geliefert werden. Dies allerdings mit dem Unterschied, dass die Außenwandung 8' der oberen Halbschale 3, aber auch die Außenwandung 8 der unteren Halbschale jeweils einen deutlichen Rücksprung gegenüber der Oberkante der Au-ßenwandung 8 der unteren Halbschale 4 aufweisen. Dies gilt sowohl für die untere als auch für die obere Halbschale.

Dementsprechend können in einem weiteren Bearbeitungsschritt zunächst die Innenwandungen 7, 7' der unteren und der oberen Halbschale 4 und 3 miteinander verschweißt werden, so dass dann nach diesem vorläufigen Schließen des Batteriegehäuses 1, das erst nach Einsetzen der Batterie 2 in die untere Halbschale 4 vorgenommen wird, eine Lücke zwischen dem Isoliermaterial der unteren Halbschale 4 und der oberen Halbschale 3, sowie eine Lücke zwischen der Außenwandung 8 der unteren Halbschale 4 und der Außenwandung 8' der oberen Halbschale 3 besteht. Diese Lücke kann dann mittels eines das Batteriegehäuse 1 umschließenden Ringblechs 30 geschlossen werden, das in seinem Überlappungsbereich - analog einer Fassdaube - miteinander verschweißt wird und somit das Batteriegehäuse 1 außenseitig abschließt. In vorteilhafter Ausgestaltung ist dieses Ringblech 30 auf seiner dem Inneren des Batteriegehäuses 1 zugewandten Seite bereits mit einem geeigneten Isolierformteil 11 verklebt, so dass auch im Bereich dieser Ringmanschette für eine Isolierung des Batteriegehäuses 1 gesorgt ist. In alternativer Ausgestaltung können statt einer einzigen Ringmanschette bzw. einem einzigen Ringblech 30 auch mehrerer Ringblechabschnitte miteinander bis zur Ausbildung eines das Batteriegehäuse 1 vollständig umschließenden Ringblechs 30 vorgesehen sein, um das Batteriegehäuse 1 bestimmungsgemäß zu verschließen. Der Vorteil dieser Lösung besteht darin, dass auch die obere Halbschale 3 als vollständig vormontiertes Zwischenprodukt ausgeliefert werden kann, wobei dieser Vorteil mit dem allerdings vergleichsweise einfachen zusätzlichen Aufwand, nämlich der Anbringung der erwähnten Ringmanschette, bezahlt wird.

## Patentansprüche

1. Verfahren zur Herstellung eines multifunktionalen Batteriegehäuses (1) mit integriertem Thermo-Management, umfassend eine obere und eine untere Halbschale (3 und 4), die miteinander zu einem Batteriegehäuse (1) verbunden werden derart, dass als Teil-Zwischenprodukt
- eine untere Halbschale (4), umfassend eine Innenwandung (7) und eine Außenwandung (8), zwischen denen ein oder mehrere Isolierformteile (11) als Isolations- und/oder Stützmaterial (24) angeordnet sind, hergestellt wird, und
- dass als weiteres Teil-Zwischenprodukt eine obere Halbschale (3), umfassend eine vorgeformte Innenwandung (7') und eine vorgeformte Au-ßenwandung (8'), unter Zwischenlage vorgefertigter Isolierformteile (11) hergestellt wird
- und diese Teil-Zwischenprodukte, vorzugsweise unmittelbar beim Batteriehersteller, zu einem Batteriegehäuse (1) mit integrierter Batterie (2) derart zusammengesetzt werden, dass die Batterie (2) vor Ort in die untere Halbschale (4) eingesetzt wird,
- dann die Innenwandung (7') der oberen Halbschale (3) mit der Innenwandung (7) der unteren Halbschale (4) mittels bedarfsweise auftrennbarer Schweißnähte verbunden wird, und
- anschließend die Außenwandung (8') der oberen Halbschale (3) unter Zwischenlage der vorgeformten Isolierformteile (11) auf die Innenwandung (7') der oberen Halbschale (3) aufgesetzt und mit der Außenwandung (8) der unteren Halbschale (4) mittels bedarfsweise auftrennbarer Schweißnähte derart verbunden wird, dass die Offenseiten der unteren und oberen Halbschalen (3 und 4) einander jeweils gegenüber liegen und dass die einzelnen Halbschalen (3, 4) jeweils eine Innen- und Au-ßenwandung (7, 7' bzw. 8, 8') unter Zwischenlage eines Isolierformteils (11) umfassen.

2. Verfahren zur Herstellung eines Batteriegehäuses (1) nach Anspruch 1, **dadurch gekennzeichnet, dass** die Innen- und die Außenwandungen (7, 7' und 8, 8') der doppelwandigen unteren Halbschale (4) und der doppelwandigen oberen Halbschale (3) jeweils im Wege des Hydroformings hergestellt werden.

3. Verfahren zur Herstellung eines Batteriegehäuses (1) nach einem oder mehreren der vorhergehenden Ansprüche, **dadurch gekennzeichnet, dass** die Außenwandungen (8, 8') der unteren und/oder oberen Halbschale (3, 4) jeweils mit einer außenseitig umgreifenden Blechmanschette (14) verstärkt werden.

4. Verfahren zur Herstellung eines Batteriegehäuses (1) nach einem oder mehreren der vorhergehenden Ansprüche, **dadurch gekennzeichnet, dass** die Außenwandungen (8, 8') der unteren und/oder oberen Halbschalen (4, 3), vorzugsweise im Bereich von Befestigungselementen zur Verbindung des Batteriegehäuses (1) mit einer Fahrzeugkarosserie, jeweils mit Tailored Blanks abschnittsweise zusätzlich verstärkt werden.

5. Verfahren nach einem oder mehreren der vorhergehenden Ansprüche, **dadurch gekennzeichnet, dass** die Außenwandung (8) der unteren Halbschale (4) zusätzlich mit einer schussfesten Platte oder einem schussfesten, der Außenkontur der unteren Habschale (4) angepassten Formteil zumindest abschnittsweise fest verbunden ist.

6. Verfahren nach Anspruch 5, **dadurch gekennzeichnet, dass** diese Platte oder dieses Formteil leicht sowie zäh und hochfest ausgebildet ist.

7. Verfahren nach Anspruch 6, **dadurch gekennzeichnet, dass** die Platte oder das Formteil auswechselbar, etwa durch Klebung, Spannbänder oder mittels Laschenelementen, vorzugsweise unter Einschluss eines Luftspaltes, mit der unteren Halbschale verbunden ist.

8. Verfahren zur Herstellung eines Batteriegehäuses (1) nach einem oder mehreren der vorhergehenden Ansprüche, **dadurch gekennzeichnet, dass** die Halbschalen (3, 4) nach dem Einsetzen der Batterie (2) in die untere Halbschale (4) mittels umlaufender Schweißnähte (5, 6) miteinander verbunden werden.

9. Verfahren zur Herstellung eines Batteriegehäuses (1) nach einem oder mehreren der vorhergehenden Ansprüche, **dadurch gekennzeichnet, dass** die Oberkante der unteren Halbschale (4) und die Unterkante der oberen Halbschale (3) jeweils an den Außenwandungen (8, 8') mit umlaufenden Blechfahnen versehen sind, die zur Ausbildung einer Rollnaht ineinander eingedreht und miteinander verschweißt werden.

10. Verfahren zur Herstellung eines Batteriegehäuses (1) nach einem oder mehreren der vorhergehenden Ansprüche, **dadurch gekennzeichnet, dass** die Halbschalen (3, 4) und/oder die Halbschalenabschnitte jeweils mit einem oder mehreren Vakuumports zur Evakuierung des und/oder der innenliegenden Isolierformteils und/oder der Isolierformteile versehen sind.

11. Verfahren zur Herstellung eines Batteriegehäuses (1) nach Anspruch 10, **dadurch gekennzeichnet, dass** ein Vakuumport jeweils eine Öffnung (15) der Außenwandung (8, 8') der unteren oder der oberen Halbschale (3 bzw. 4) umfasst, wobei diese Öffnung (15) von einem treppenartigen, metallischen Saugflansch (23) umgriffen ist, der einen Absatz (26) ausbildet, der mit einer metallischen Dichtungsmasse (27), vorzugsweise mit einem vakuumtauglichen Lot, etwa Silberlot, bestückt ist und wobei der Saugflansch (23) auf seiner dem Isolations- oder Stützmaterial (24) zugewandten Unterkante mit einem die Öffnung (15) übergreifenden Drahtgitter (25) verschweißt ist, und auf dem Treppenabsatz (26) auf der dem Isolations- und/oder Stützmaterial (24) abgewandten Oberkante mit einem konvex nach außen gewölbten Deckelelement (22), das die Öffnung (15) im gewölbten Zustand nicht abdeckt, versehen ist und anschließend an den Vakuumport eine die Öffnung (15) übergreifende Saugglocke (16) mit angeschlossener Vakuumpumpe (17) anschließbar ist, mit deren Hilfe das innenliegende Stütz- und/oder Isolationsmaterial (24) evakuiert, und schließlich das gewölbte Deckelelement (22) mittels eines in die Saugglocke (16) integrierten Stempels (28) gespreizt, mithin in die metallische Dichtungsmasse (27) gedrückt wird und hierdurch, die Öffnung (15) verschlossen und abgedichtet ist.

12. Verfahren zur Herstellung eines Batteriegehäuses (1) nach Anspruch 10, **dadurch gekennzeichnet, dass** ein Vakuumport jeweils eine Öffnung (15) der Außenwandung (8, 8') der unteren oder oberen Halbschale (3 bzw. 4) umfasst, wobei die Umrandung dieser Öffnung (15) auf ihrer dem Isolations- und Stützmaterial (24) abgewandten Oberfläche mit einer metallischen Dichtungsmasse (27), vorzugsweise einem vakuumtauglichen Lot, versehen ist, und oberhalb dieser Öffnung (15) ein Deckelelement (21) beabstandet mit einer Haltestange gehalten wird und diese Öffnung (15) von einer Saugglocke (16) mit angeschlossener Vakuumpumpe (17) übergriffen ist, mit deren Hilfe der zwischen der Innen- und Außenwandung (7, 7', 8, 8') befindliche Isolationsspalt mit dem innenliegenden Stütz- und/oder Isolationsmaterial (24) nach vollständiger Montage und dem Fügen und Verschließen der Halbschalen (3, 4) evakuiert und anschließend die metallische Dichtungsmasse (27) induktiv erwärmt wird bis die metallische Dichtungsmasse (27) flüssig wird und schließlich die Halterung des Deckelelementes (21) gelöst wird, mithin das Deckelelement (21) derart abgesenkt wird, dass dieses Deckelelement (21) die Öffnung (15) verschließt und der Außenumfang des Deckelelementes (21) in die erwärmte Dichtungsmasse (27) eintaucht, dann die induktive Heizung abgeschaltet wird und nach Abkühlung und Aushärtung der metallischen Dichtungsmasse (27) die Öffnung (15) verschlossen ist.

13. Verfahren zur Herstellung eines Batteriegehäuses (1) nach Anspruch 10, **dadurch gekennzeichnet, dass** ein Vakuumport jeweils eine Öffnung (15) der Außenwandung (8, 8') der unteren oder der oberen Halbschale (3, 4) umfasst, wobei die Öffnung (15) von einer Saugglocke (16) mit angeschlossener Vakuumpumpe (17) übergriffen ist, mit deren Hilfe das innenliegende Stütz- und/oder Isolationsmaterial (24) evakuiert und anschließend die Öffnung (15) mit einem Stopfen verschließbar ist, der mittels einer Laserschweißnaht oder einer sonstigen Schweißnaht in der Verschlusslage der Vakuumport vakuumdicht verschlossen wird.

14. Verfahren zur Herstellung eines Batteriegehäuses (1) nach Anspruch 1, **dadurch gekennzeichnet, dass** die untere Halbschale, umfassend eine Innenwandung (7) und eine Außenwandung (8), zwischen denen ein oder mehrere Isolierformteile (11) als Isolations- und/oder Stützmaterial (24) angeordnet sind, sowie mit einer Durchführung (10) von innen durch die Innenwandung (7), das Isolations- und/oder Stützmaterial (24) sowie die Außenwandung (8) nach außen für einen oder mehrere elektrische Anschlüsse, als Teil-Zwischenprodukt vorgefertigt ist und dieses erste Teil-Zwischenprodukt gemäß Anspruch 1 mit der Batterie (2) bestückt und mit dem weiteren Teilzwischenprodukt der oberen Halbschale (3) zu einem Batteriegehäuse (1) ergänzt wird, dessen Isolierspalt zwischen den Wandungen (7, 7',8, 8') nach vollständiger Montage und dem Fügen und Verschließen der Halbschalen (3,4) gemäß Anspruch 8 über einen oder mehrere Vakuumports evakuierbar sind.

15. Verfahren zur Herstellung eines Batteriegehäuses (1) nach Anspruch 1, **dadurch gekennzeichnet, dass** die untere Halbschale, umfassend eine Innenwandung (7) und eine Außenwandung (8), zwischen denen ein oder mehrere Isolierformteile (11) als Isolations- und/oder Stützmaterial (24) angeordnet sind, sowie mit einer Durchführung (10) von innen durch die Innenwandung (7), das Isolations- und/oder Stützmaterial (24) sowie die Außenwandung (8) nach außen für einen oder mehrere elektrische Anschlüsse, als Teil-Zwischenprodukt vorgefertigt ist und auch die obere Halbschale (3), umfassend eine vorgeformte Innenwandung (7') und eine vorgeformte Außenwandung (8'), unter Zwischenlage eines oder mehrerer vorgefertigter Isolierformteile (11) hergestellt wird, und nach dem Einsetzen der Batterie (2) in die untere Halbschale (4) die obere Halbschale (3) auf die untere Halbschale formschlüssig aufgesetzt wird und anschließend die Außenwandungen (8, 8') der beiden Halbschalen (3, 4) in deren Verbindungsbereich mittels eines umlaufenden Ringblechs oder mehrerer sich zu einem Ringblech ergänzender Ringblechabschnitte vakuumdicht miteinander verbunden werden.

16. Verfahren zur Herstellung eines Batteriegehäuses (1) nach Anspruch 15, **dadurch gekennzeichnet, dass** das umlaufende Ringblech oder die sich zu einem Ringblech ergänzenden Ringblechabschnitte jeweils auf ihrer dem Innenraum des Batteriegehäuses (1) zugewandten Seite mit einem entsprechenden Isolierformteil bestückt sind.

17. Verfahren zur Herstellung eines Batteriegehäuses (1) nach Anspruch 15 oder 16, **dadurch gekennzeichnet, dass** die Außenwandungen (8, 8') der unteren und oberen Habschale (3 und 4) derart voneinander beabstandet sind, dass durch den insoweit eröffneten Spalt der Außenwandungen (8, 8') die Innenwandungen (7, 7') mittels einer umlaufenden Schweißnaht miteinander verbindbar sind.

## Claims

1. A method for producing a multifunctional battery housing (1) having integrated thermal management, comprising an upper and a lower half shell (3 and 4), which are connected to one another to form a battery housing (1) such that, as a partial intermediate product
- a lower half shell (4), comprising an inner wall (7) and an outer wall (8), between which one or more insulation molded parts (11) are arranged as insulation and/or supporting material (24), is produced, and
- as a further partial intermediate product, an upper half shell (3), comprising a preformed inner wall (7') and a preformed outer wall (8'), with prefinished insulation molded parts (11) interposed, is produced,
- and these partial intermediate products, preferably directly at the battery producer, are assembled to form a battery housing (1) having integrated battery (2) in such a way that the battery (2) is inserted on location into the lower half shell (4),
- then the inner wall (7') of the upper half shell (3) is connected to the inner wall (7) of the lower half shell (4) by means of weld seams which can be severed if needed, and
- subsequently the outer wall (8') of the upper half shell (3), with the preformed insulation molded parts (11) interposed, is placed on the inner wall (7') of the lower half shell (3) and connected to the outer wall (8) of the lower half shell (4) by means of weld seams which can be severed if needed, in such a way that the open sides of the lower and upper half shells (3 and 4) are each opposite to one another, and the individual half shells (3, 4) each comprise an inner and outer wall (7, 7' and 8, 8', respectively) with an insulation molded part (11) interposed.

2. The method for producing a battery housing (1) according to Claim 1, **characterized in that** the inner and the outer walls (7, 7' and 8, 8') of the double-walled lower half shell (4) and the double-walled upper half shell (3) are each produced in the manner of hydroforming.

3. The method for producing a battery housing (1) according to one or more of the preceding claims, **characterized in that** the outer walls (8, 8') of the lower and/or upper half shells (3, 4) are each reinforced using an externally enclosing sheet metal collar (14).

4. The method for producing a battery housing (1) according to one or more of the preceding claims, **characterized in that** the outer walls (8, 8') of the lower and/or upper half shells (4, 3) are each additionally reinforced in sections using tailored blanks, preferably in the region of fastening elements for connecting the battery housing (1) to a vehicle body.

5. The method according to one or more of the preceding claims, **characterized in that** the outer wall (8) of the lower half shell (4) is additionally fixedly connected at least in sections to a bulletproof plate or a bulletproof molded part adapted to the outer contour of the lower half shell (4).

6. The method according to Claim 5, **characterized in that** this plate or this molded part is formed light and also tough and high-strength.

7. The method according to Claim 6, **characterized in that** the plate or the molded part is connected replaceably, for example, by adhesive bonding, tightening straps, or by means of tab elements, preferably with inclusion of an air gap, to the lower half shell.

8. The method for producing a battery housing (1) according to one or more of the preceding claims, **characterized in that** the half shells (3, 4) are connected to one another by means of circumferential weld seams (5, 6) after the insertion of the battery (2) into the lower half shell (4).

9. The method for producing a battery housing (1) according to one or more of the preceding claims, **characterized in that** the upper edge of the lower half shell (4) and the lower edge of the upper half shell (3) are each provided on the outer walls (8, 8') with circumferential sheet-metal tabs, which are twisted into one another and welded to one another to form a roll seam.

10. The method for producing a battery housing (1) according to one or more of the preceding claims, **characterized in that** the half shells (3, 4) and/or the half shell sections are each provided with one or more vacuum ports for evacuating the internal insulation molded part and/or the insulation molded parts.

11. The method for producing a battery housing (1) according to Claim 10, **characterized in that** a vacuum port respectively comprises an opening (15) of the outer wall (8, 8') of the lower or the upper half shell (3 or 4, respectively), wherein this opening (15) is enclosed by a stepped, metallic suction flange (23), which forms a step (26), which is equipped with a metallic sealing compound (27), preferably with a vacuum-suitable solder, such as silver solder, and wherein the suction flange (23) is welded on its lower edge facing toward the insulation or supporting material (24) to a wire mesh (25) covering the opening (15), and is provided on the step (26), on the upper edge facing away from the insulation and supporting material (24), with a cover element (22) curved convexly outward, which does not cover the opening (15) in the curved state, and subsequently a suction cup (16) having connected vacuum pump (17), which covers the opening (15), is connectable to the vacuum port, with the aid of which the internal support and/or insulation material (24) is evacuated, and finally the curved cover element (22) is spread by means of a stamp (28) integrated into the suction cup (16), is therefore pressed into the metallic sealing compound (27), and in this way the opening (15) is closed and sealed.

12. The method for producing a battery housing (1) according to Claim 10, **characterized in that** a vacuum port respectively comprises an opening (15) of the outer wall (8, 8') of the lower or upper half shell (3 or 4, respectively), wherein the border of this opening (15) is provided on its surface facing away from the insulation and supporting material (24) with a metallic sealing compound (27), preferably a vacuum-suitable solder, and a cover element (21) is held spaced apart above this opening (15) using a holding rod and this opening (15) is covered by a suction cup (16) having connected vacuum pump (17), with the aid of which the insulation gap located between the inner and outer wall (7, 7', 8, 8') having the internal support and/or insulation material (24) is evacuated after complete assembly and the joining and closing of the half shells (3, 4) and subsequently the metallic sealing compound (27) is inductively heated until the metallic sealing compound (27) becomes liquid and finally the holder of the cover element (21) is detached, the cover element (21) is thus lowered such that this cover element (21) closes the opening (15) and the outer circumference of the cover element (21) plunges into the heated sealing compound (27), the inductive heater is then turned off, and after cooling and curing of the metallic sealing compound (27), the opening (15) is closed.

13. The method for producing a battery housing (1) according to Claim 10, **characterized in that** a vacuum port respectively comprises an opening (15) of the outer wall (8, 8') of the lower or the upper half shell (3, 4), wherein the opening (15) is covered by a suction cup (16) having connected vacuum pump (17), with the aid of which the internal support and/or insulation material (24) is evacuated and subsequently the opening (15) is closable using a plug, which is closed vacuum-tight by means of a laser weld seam or another weld seam in the closed position of the vacuum port.

14. The method for producing a battery housing (1) according to Claim 1, **characterized in that** the lower half shell, comprising an inner wall (7) and an outer wall (8), between which one or more insulation molded parts (11) are arranged as insulation and/or supporting material (24), and having a feedthrough (10) from the inside through the inner wall (7), the insulation and/or supporting material (24), and the outer wall (8) to the outside for one or more electrical connections, is prefinished as a partial intermediate product and this first partial intermediate product is equipped according to Claim 1 with the battery (2) and is supplemented with the further partial intermediate product of the upper half shell (3) to form a battery housing (1), the insulation gap of which between the walls (7, 7', 8, 8') is evacuable according to Claim 8 via one or more vacuum ports after completed assembly and the joining and closing of the half shells (3, 4).

15. The method for producing a battery housing (1) according to Claim 1, **characterized in that** the lower half shell, comprising an inner wall (7) and an outer wall (8), between which one or more insulation molded parts (11) are arranged as insulation and/or supporting material (24), and having a feedthrough (10) from the inside through the inner wall (7), the insulation and/or supporting material (24), and the outer wall (8) to the outside for one or more electrical connections, is prefinished as a partial intermediate product, and also the upper half shell (3), comprising a preformed inner wall (7') and a preformed outer wall (8'), is produced with one or more prefinished insulation molded parts (11) interposed, and after the insertion of the battery (2) into the lower half shell (4), the upper half shell (3) is placed in a formfitting manner onto the lower half shell, and subsequently the outer walls (8, 8') of the two half shells (3, 4) are connected to one another in a vacuum-tight manner in the connection region thereof by means of a circumferential ring plate or multiple ring plate sections combining to form a ring plate.

16. The method for producing a battery housing (1) according to Claim 15, **characterized in that** the circumferential ring plate or the ring plate sections combining to form a ring plate are each equipped on the side thereof facing toward the interior of the battery housing (1) with a corresponding insulation molded part.

17. The method for producing a battery housing (1) according to Claim 15 or 16, **characterized in that** the outer walls (8, 8') of the lower and upper half shell (3 and 4) are spaced apart from one another such that the inner walls (7, 7') are connectable to one another by means of a circumferential weld seam through the gap of the outer walls (8, 8') thus opened.

## Revendications

1. Procédé de fabrication d'un boîtier de batterie multifonctionnel (1) avec gestion thermique intégrée, comprenant une demi-coque supérieure et une demi-coque inférieure (3 et 4) qui sont reliées ensemble pour former un boîtier de batterie (1), de telle sorte que soit fabriquée, en tant que produit intermédiaire partiel,
- une demi-coque inférieure (4) comprenant une paroi intérieure (7) et une paroi extérieure (8) entre lesquelles une ou plusieurs pièces moulées isolantes (11) sont disposées en tant que matériau d'isolation et/ou de support (24), et
- que soit fabriquée, en tant qu'autre produit intermédiaire partiel, une demi-coque supérieure (3) comprenant une paroi intérieure préformée (7') et une paroi extérieure préformée (8') avec interposition de pièces moulées isolantes préfabriquées (11)
- et ces produits intermédiaires partiels sont assemblés, de préférence directement chez le fabricant de batteries, en un boîtier de batterie (1) avec batterie intégrée (2) de telle sorte que la batterie (2) est insérée sur place dans la demi-coque inférieure (4),
- puis la paroi intérieure (7') de la demi-coque supérieure (3) est reliée à la paroi intérieure (7) de la demi-coque inférieure (4) au moyen de soudures pouvant être défaites si nécessaire, et
- ensuite la paroi extérieure (8') de la demi-coque supérieure (3) est placée sur la paroi intérieure (7') de la demi-coque supérieure (3), avec interposition des pièces moulées isolantes préformées (11), et reliée à la paroi extérieure (8) de la demi-coque inférieure (4) au moyen de soudures pouvant être défaites si nécessaire, de telle sorte que les côtés ouverts des demi-coques inférieure et supérieure (3 et 4) soient opposés l'un à l'autre et que les demi-coques individuelles (3, 4) comprennent chacune une paroi intérieure et une paroi extérieure (7, 7' respectivement 8, 8') avec interposition d'une pièce moulée isolante (11).

2. Procédé de fabrication d'un boîtier de batterie (1) selon la revendication 1, **caractérisé en ce que** les parois intérieure et extérieure (7, 7' et 8, 8') de la demi-coque inférieure à double paroi (4) et de la demi-coque supérieure à double paroi (3) sont fabriquées chacune par hydroformage.

3. Procédé de fabrication d'un boîtier de batterie (1) selon l'une ou plusieurs des revendications précédentes, **caractérisé en ce que** les parois extérieures (8, 8') de la demi-coque inférieure et/ou supérieure (3, 25, 4) sont renforcées chacune par une manchette métallique (14) qui l'entoure extérieurement.

4. Procédé de fabrication d'un boîtier de batterie (1) selon l'une ou plusieurs des revendications précédentes, **caractérisé en ce que** les parois extérieures (8, 8') des demi-coques inférieure et/ou supérieure (4, 3), de préférence dans la zone d'éléments de fixation servant à relier le boîtier de batterie (1) à une carrosserie de véhicule, sont en outre renforcées chacune sur certaines parties par des flancs sur mesure.

5. Procédé selon l'une ou plusieurs des revendications précédentes, **caractérisé en ce que** la paroi extérieure (8) de la demi-coque inférieure (4) est en outre solidement reliée au moins sur certaines parties à une plaque à l'épreuve des balles ou à une pièce moulée à l'épreuve des balles adaptée au contour extérieur de la demi-coque inférieure (4).

6. Procédé selon la revendication 5, **caractérisé en ce que** cette plaque ou cette pièce moulée est conçue légère, robuste et à haute résistance.

7. Procédé selon la revendication 6, **caractérisé en ce que** la plaque ou la pièce moulée est reliée à la demi-coque inférieure de manière interchangeable, par exemple par collage, avec des colliers de fixation ou au moyen d'éléments à languette, de préférence en incluant un espace d'air.

8. Procédé de fabrication d'un boîtier de batterie (1) selon l'une ou plusieurs des revendications précédentes, **caractérisé en ce que** les demi-coques (3, 4) sont reliées ensemble au moyen de soudures périphériques (5, 6) après que la batterie (2) a été insérée dans la demi-coque inférieure (4).

9. Procédé de fabrication d'un boîtier de batterie (1) selon l'une ou plusieurs des revendications précédentes, **caractérisé en ce que** le bord supérieur de la demi-coque inférieure (4) et le bord inférieur de la demi-coque supérieure (3) sont munis chaque fois sur les parois extérieures (8, 8') de languettes métalliques périphériques qui sont enroulées l'une dans l'autre et soudées ensemble pour former un joint roulé.

10. Procédé de fabrication d'un boîtier de batterie (1) selon l'une ou plusieurs des revendications précédentes, **caractérisé en ce que** les demi-coques (3, 4) et/ou les parties de demi-coque sont munies chacune d'un ou plusieurs orifices d'aspiration pour la mise sous vide de la pièce moulée isolante et/ou des pièces moulées isolantes intérieure(s).

11. Procédé de fabrication d'un boîtier de batterie (1) selon la revendication 10, **caractérisé en ce que** chaque orifice d'aspiration comprend une ouverture (15) de la paroi extérieure (8, 8') de la demi-coque inférieure ou supérieure (3 ou 4), cette ouverture (15) étant entourée d'une bride d'aspiration métallique (23) en forme d'escalier qui forme un épaulement (26) qui est garni d'une masse d'étanchéité métallique (27), de préférence d'une brasure compatible avec le vide, par exemple une brasure à l'argent, et dans lequel la bride d'aspiration (23) est soudée sur son bord inférieur tourné vers le matériau d'isolation ou de support (24) avec une grille métallique (25) recouvrant l'ouverture (15), et munie sur le palier (26), sur le bord supérieur opposé au matériau d'isolation et/ou de support (24), d'un élément de recouvrement (22) bombé de manière convexe vers l'extérieur qui ne recouvre pas l'ouverture (15) à l'état bombé, et ensuite une cloche d'aspiration (16) recouvrant l'ouverture (15), à laquelle est raccordée une pompe à vide (17), peut être raccordée à l'orifice d'aspiration, à l'aide de laquelle le matériau de support et/ou d'isolation intérieur (24) est mis sous vide, et enfin l'élément de couvercle bombé (22) est écarté au moyen d'un piston (28) intégré dans la cloche d'aspiration (16) et ainsi pressé dans la masse d'étanchéité métallique (27) de sorte à fermer et rendre étanche l'ouverture (15).

12. Procédé de fabrication d'un boîtier de batterie (1) selon la revendication 10, **caractérisé en ce que** chaque orifice d'aspiration comprend une ouverture (15) de la paroi extérieure (8, 8') de la demi-coque inférieure ou supérieure (3 ou 4), la bordure de cette ouverture (15) étant munie sur sa surface opposée au matériau d'isolation et de support (24) d'une masse d'étanchéité métallique (27), de préférence d'une brasure compatible avec le vide, et un élément de recouvrement (21) est maintenu à distance au-dessus de cette ouverture (15) par une tige de maintien et cette ouverture (15) est recouverte par une cloche d'aspiration (16) à laquelle est raccordée une pompe à vide (17) à l'aide de laquelle l'espace isolant avec le matériau de support et/ou d'isolation intérieur (24) se trouvant entre les parois intérieures et extérieures (7, 7', 8, 8') est mise sous vide après montage complet puis assemblage et fermeture des demi-coques (3, 4), et ensuite la masse d'étanchéité métallique (27) est chauffée par induction jusqu'à ce que la masse d'étanchéité métallique (27) devienne liquide et finalement que le support de l'élément de recouvrement (21) soit libéré, l'élément de recouvrement (21) étant ainsi abaissé de sorte que cet élément de recouvrement (21) ferme l'ouverture (15) et que la circonférence extérieure de l'élément de recouvrement (21) plonge dans la masse d'étanchéité (27) chauffée, puis le chauffage par induction est arrêté et, après refroidissement et durcissement de la masse d'étanchéité métallique (27), l'ouverture (15) est fermée.

13. Procédé de fabrication d'un boîtier de batterie (1) selon la revendication 10, **caractérisé en ce que** chaque orifice d'aspiration comprend une ouverture (15) de la paroi extérieure (8, 8') de la demi-coque inférieure ou supérieure (3, 4), l'ouverture (15) étant recouverte d'une cloche d'aspiration (16) à laquelle est raccordée une pompe à vide (17), à l'aide de laquelle le matériau de support et/ou d'isolation intérieur (24) est mis sous vide et ensuite l'ouverture (15) peut être fermée avec un bouchon qui est fermé de manière étanche au vide dans la position de fermeture de l'orifice d'aspiration au moyen d'une soudure au laser ou d'une autre soudure.

14. Procédé de fabrication d'un boîtier de batterie (1) selon la revendication 1, **caractérisé en ce que** la demi-coque inférieure, comprenant une paroi intérieure (7) et une paroi extérieure (8), entre lesquelles une ou plusieurs pièces moulées isolantes (11) sont disposées en tant que matériau d'isolation et/ou de support (24), est préfabriquée en tant que produit intermédiaire partiel avec un passage (10) pour un ou plusieurs raccordements électriques de l'intérieur vers l'extérieur à travers la paroi intérieure (7), le matériau d'isolation et/ou de support (24) ainsi que la paroi extérieure (8), et ce premier produit intermédiaire partiel est, selon la revendication 1, équipé de la batterie (2) et complété par l'autre produit intermédiaire partiel de la demi-coque supérieure (3) pour former un boîtier de batterie (1) dont l'espace isolant entre les parois (7, 7', 8, 8') peut être mis sous vide par un ou plusieurs orifices d'aspiration après montage complet puis assemblage et fermeture des demi-coques (3, 4) selon la revendication 8.

15. Procédé de fabrication d'un boîtier de batterie (1) selon la revendication 1, **caractérisé en ce que** la demi-coque inférieure, comprenant une paroi intérieure (7) et une paroi extérieure (8), entre lesquelles une ou plusieurs pièces moulées isolantes (11) sont disposées en tant que matériau d'isolation et/ou de support (24), est préfabriquée en tant que produit intermédiaire partiel avec un passage (10) pour un ou plusieurs raccordements électriques de l'intérieur vers l'extérieur à travers la paroi intérieure (7), le matériau d'isolation et/ou de support (24) ainsi que la paroi extérieure (8) et également la demi-coque supérieure (3), comprenant une paroi intérieure préformée (7') et une paroi extérieure préformée (8'), est fabriquée avec interposition d'une ou plusieurs pièces moulées isolantes préformées (11), et après que la batterie (2) a été insérée dans la demi-coque inférieure (4), la demi-coque supérieure (3) est placée par complémentarité de forme sur la demi-coque inférieure, puis les parois extérieures (8, 8') des deux demi-coques (3, 4) sont reliées ensemble de manière étanche au vide dans leur zone de liaison au moyen d'une tôle annulaire périphérique ou de plusieurs parties de tôle annulaire qui se complètent pour former une tôle annulaire.

16. Procédé de fabrication d'un boîtier de batterie (1) selon la revendication 15, **caractérisé en ce que** la tôle annulaire périphérique ou les parties de tôle annulaire qui se complètent pour former une tôle annulaire sont munies chacune, sur leur côté tourné vers l'intérieur du boîtier de batterie (1), d'une pièce moulée isolante correspondante.

17. Procédé de fabrication d'un boîtier de batterie (1) selon la revendication 15 ou 16, **caractérisé en ce que** les parois extérieures (8, 8') des coques inférieure et supérieure (3 et 4) sont espacées l'une de l'autre de telle sorte que les parois intérieures (7, 7') peuvent être reliées ensemble au moyen d'une soudure périphérique à travers l'espace ainsi ouvert entre les parois extérieures (8, 8').
